# EUROPEAN PATENT APPLICATION

(11) **EP 4 611 210 A1**
(43) Date of publication of application: **03.09.2025**
(21) Application number: 25160602.6
(22) Date of filing: 27.02.2025
(51) Int. Cl.: H02J 4/00, H02J 7/00, H02J 7/02, H02J 9/06

(54) **UNINTERRUPTIBLE POWER SUPPLY SYSTEM**

(30) Priority: 29.02.2024 CN 202410245925
(71) Applicant: Huawei Digital Power Technologies Co., Ltd., Shenzhen, Guangdong 518043 (CN)
(72) Inventor: HUANG, Zhuyong, Shenzhen, Guangdong, 518043 (CN); KANG, Junpeng, Shenzhen, Guangdong, 518043 (CN); ZHANG, Chuntao, Shenzhen, Guangdong, 518042 (CN)
(74) Representative: Maiwald GmbH

(57) **Abstract**

This application provides an uninterruptible power supply system, to reduce costs of an uninterruptible power supply, improve circuit utilization, reduce specifications of a fuse, and better protect a component in a circuit. The uninterruptible power supply includes three-phase alternating current input ends, a switching circuit, a three-phase rectifier circuit, a three-phase inverter circuit, a charge/discharge circuit, at least two first fuses, and at least two second fuses. Each phase rectifier circuit includes two single-phase rectifier units that are connected in parallel. One first fuse is separately connected in series to at least two phase lines in a three-phase line between a positive electrode of an energy storage apparatus and an input end of one single-phase rectifier unit in each phase rectifier circuit. One second fuse is separately connected in series to at least two phase lines in a three-phase line between a negative electrode of the energy storage apparatus and an input end of the other single-phase rectifier unit in each phase rectifier circuit. In this way, the positive electrode and the negative electrode of the energy storage apparatus may be connected to a plurality of fuses after being connected to the uninterruptible power supply system, thereby reducing the specifications of the fuse current of a single fuse.

## Description

### TECHNICAL FIELD

This application relates to the field of power electronics technologies, and in particular, to an uninterruptible power supply system.

### BACKGROUND

An uninterruptible power supply (uninterruptible power supply, UPS) system is a power supply that includes an energy storage apparatus, and is mainly used to provide an uninterruptible power supply for some electronic devices that have high requirements on power stability. The UPS system mainly includes a rectifier circuit (AC/DC circuit), an inverter circuit (DC/AC circuit), and a charge/discharge circuit (DC/DC circuit). The rectifier circuit and the charge/discharge circuit are completely independent of each other, and supply power to a direct current bus in a mode of supplying power through mains electricity and a mode of supplying power through the energy storage apparatus, respectively. Then, the inverter circuit converts a direct current into an alternating current, and supplies the alternating current to a load. Specifically, when the mains electricity is normally input, the UPS system converts the mains electricity into a stable direct current through the rectifier circuit, and then converts the direct current into an alternating current through the inverter circuit, and supplies the alternating current to the load for use. In this case, the UPS system is an alternating current mains voltage regulator, and may also reversely charge the energy storage apparatus through the charge/discharge circuit. When the mains electricity fails due to an accident or is interrupted, the UPS system immediately switches to the mode of supplying power through the energy storage apparatus, first converts energy of the energy storage apparatus into a stable direct current through the charge/discharge circuit, then converts the stable direct current through the inverter circuit, and continues to supply a three-phase alternating current of 380 V or a single-phase alternating current of 220 V to the load. In this way, the load works normally, and power supplied to the load is not interrupted.

From the foregoing working principle of the UPS system, it can be learned that the charge/discharge circuit is always in a working state in the mode of supplying power through the energy storage apparatus, a power of the charge/discharge circuit needs to meet a rated power of the UPS system, and a required circuit volume is large. In addition, the rectifier circuit is in the working state only in the mode of supplying power through mains electricity and is in an idle state in the mode of supplying power through the energy storage apparatus, which reduces circuit utilization and brings disadvantages in costs and space. Moreover, fuses are disposed at an input end and an output end of the UPS system. To meet a power requirement in the mode of supplying power through the energy storage apparatus, a large fuse needs to be disposed for the fuse at a port at which the UPS system is connected to the energy storage apparatus. This brings a large current, and makes it difficult to perform internal protection on the UPS system.

Embodiments of this application provide an uninterruptible power supply system, to reduce costs of an uninterruptible power supply, improve circuit utilization of the uninterruptible power supply, reduce specifications of a fuse, and better protect a component in a circuit.

To achieve the foregoing objective, this application uses the following technical solutions.

According to a first aspect of the embodiments of this application, an uninterruptible power supply system is provided, and may specifically include three-phase alternating current input ends, a switching circuit, a three-phase rectifier circuit, a three-phase inverter circuit, a charge/discharge circuit, at least two first fuses, and at least two second fuses. The three-phase rectifier circuit is configured to convert alternating currents input by the three-phase alternating current input ends into direct currents. An output end of the three-phase rectifier circuit is connected to an input end of the three-phase inverter circuit. The three-phase inverter circuit is configured to convert the direct currents into alternating currents. An output end of the three-phase inverter circuit is an output end of the uninterruptible power supply system. The three-phase rectifier circuit includes a first capacitor and a second capacitor that are connected between a positive bus and a negative bus and that are connected in series. Each phase rectifier circuit in the three-phase rectifier circuit each includes two single-phase rectifier units that are connected in parallel. An output end of each single-phase rectifier unit is connected to a connection point of the first capacitor and the second capacitor. An input end of each phase rectifier circuit is connected to a one-phase alternating current input end of the three-phase alternating current input ends. An input end of one single-phase rectifier unit in each phase rectifier circuit is configured to connect the one-phase alternating current input end and a positive electrode of an energy storage apparatus. An input end of the other single-phase rectifier unit is configured to connect the one-phase alternating current input end and a negative electrode of the energy storage apparatus. The switching circuit is configured to switch between connecting first lines between the three-phase alternating current input ends and input ends of single-phase rectifier units in the three-phase rectifier circuit and connecting second lines between the positive electrode and the negative electrode of the energy storage apparatus and the input ends of corresponding single-phase rectifier units. One first fuse is separately connected in series to at least two phase lines in a three-phase second line between the positive electrode of the energy storage apparatus and the input end of the one single-phase rectifier unit in each phase rectifier circuit. One second fuse is separately connected in series to at least two phase lines in a three-phase second line between the negative electrode of the energy storage apparatus and the input end of the other single-phase rectifier unit in each phase rectifier circuit. A first positive end of the charge/discharge circuit is connected to one of the at least two first fuses. A first negative end of the charge/discharge circuit is connected to one of the at least two second fuses. A second positive end of the charge/discharge circuit is configured to connect to the positive bus. A second negative end of the charge/discharge circuit is configured to connect to the negative bus.

In this application, different first fuses and second fuses are connected in series to different second lines. In this way, after being connected to the uninterruptible power supply system, the positive electrode and the negative electrode of the energy storage apparatus are separately divided to at least two lines from one line. After a fuse on one line is blown, another line may maintain a connected state, so that specifications of a fuse current of a single fuse can be reduced, and small fuse specifications can be used in the uninterruptible power supply system to better protect a component in a circuit.

In some embodiments of this application, the uninterruptible power supply system may include three first fuses. One first fuse is connected in series to each phase line in the three-phase line between the positive electrode of the energy storage apparatus and the input end of the one single-phase rectifier unit in each phase rectifier circuit.

In some other embodiments of this application, the uninterruptible power supply system may include two first fuses. One same first fuse is connected in series to two phase lines in the three-phase line between the positive electrode of the energy storage apparatus and the input end of the one single-phase rectifier unit in each phase rectifier circuit. The other first fuse is connected in series to the other phase line.

In some embodiments of this application, the uninterruptible power supply system may include three second fuses. One second fuse is connected in series to each phase line in the three-phase line between the negative electrode of the energy storage apparatus and the input end of the other single-phase rectifier unit in each phase rectifier circuit.

In some other embodiments of this application, the uninterruptible power supply system may include two second fuses. One same second fuse is connected in series to two phase lines in the three-phase line between the negative electrode of the energy storage apparatus and the input end of the other single-phase rectifier unit in each phase rectifier circuit. The other second fuse is connected in series to the other phase line.

In some embodiments of this application, the switching circuit includes: mains switches that are located between the three-phase alternating current input ends and the input end of each phase rectifier circuit; positive energy storage switches that are located on each phase line in the three-phase line between the positive electrode of the energy storage apparatus and the input end of the one single-phase rectifier unit in each phase rectifier circuit; and negative energy storage switches that are located on each phase line in the three-phase line between the negative electrode of the energy storage apparatus and the input end of the other single-phase rectifier unit in each phase rectifier circuit.

In some embodiments of this application, the positive electrode of the energy storage apparatus is separately connected in series to the at least two first fuses and then is connected in series to the positive energy storage switches. The negative electrode of the energy storage apparatus is separately connected in series to the at least two second fuses and then is connected in series to the negative energy storage switches.

In some embodiments of this application, the uninterruptible power supply system further includes a controller. The controller is configured to control discharge duration in which the charge/discharge circuit discharges electric energy stored in the energy storage apparatus to the positive bus and the negative bus. The discharge duration is negatively correlated with a current working temperature of the charge/discharge circuit.

In some embodiments of this application, the uninterruptible power supply system further includes a controller. The controller is configured to control discharge duration in which the charge/discharge circuit discharges electric energy stored in the energy storage apparatus to the positive bus and the negative bus. The discharge duration is negatively correlated with a discharge power of the charge/discharge circuit.

In some embodiments of this application, the controller is specifically configured to control first duration within the discharge duration to be positively correlated with the discharge duration. The first duration is duration from a moment at which the lines between the three-phase alternating current input ends and the input ends of the single-phase rectifier units in the three-phase rectifier circuit are disconnected to a moment at which the lines between the positive electrode and the negative electrode of the energy storage apparatus and the input ends of the corresponding single-phase rectifier units are connected. Alternatively, the first duration is duration from a moment at which the lines between the positive electrode and the negative electrode of the energy storage apparatus and the input ends of the corresponding single-phase rectifier units are disconnected to a moment at which the lines between the three-phase alternating current input ends and the input ends of the single-phase rectifier units in the three-phase rectifier circuit are connected.

In some embodiments of this application, the controller is specifically configured to control second duration within the discharge duration to be positively correlated with the discharge duration. The second duration is duration from a moment at which the lines between the positive electrode and the negative electrode of the energy storage apparatus and the input ends of the corresponding single-phase rectifier units are connected to a moment at which the charge/discharge circuit stops working. Alternatively, the second duration is duration from a moment at which the lines between the three-phase alternating current input ends and the input ends of the single-phase rectifier units in the three-phase rectifier circuit are connected to a moment at which the charge/discharge circuit stops working.

### BRIEF DESCRIPTION OF DRAWINGS

FIG. 1 is a diagram of a structure of an uninterruptible power supply system according to an embodiment of this application;
FIG. 2 is a diagram of another structure of an uninterruptible power supply system according to an embodiment of this application;
FIG. 3 is a diagram of a specific circuit structure of an uninterruptible power supply system according to an embodiment of this application;
FIG. 4 is a diagram of another specific circuit structure of an uninterruptible power supply system according to an embodiment of this application;
FIG. 5 is a diagram of still another specific circuit structure of an uninterruptible power supply system according to an embodiment of this application;
FIG. 6 is a diagram of a time sequence in which when an alternating current power supply is faulty, a charge/discharge circuit supplies power to buses in an uninterruptible power supply system according to an embodiment of this application; and
FIG. 7 is a diagram of a time sequence in which when an alternating current power supply is restored, a charge/discharge circuit supplies power to buses in an uninterruptible power supply system according to an embodiment of this application.

### Reference numerals:

100: uninterruptible power supply system; 200: alternating current power supply; 300: energy storage apparatus; 400: load; 11: switching circuit; 12: three-phase rectifier circuit; 12a: phase-A rectifier circuit; 12b: phase-B rectifier circuit; 12c: phase-C rectifier circuit; 12a1: one single-phase rectifier unit in the phase-A rectifier circuit; 12a2: the other single-phase rectifier unit in the phase-A rectifier circuit; 12b1: one single-phase rectifier unit in the phase-B rectifier circuit; 12b2: the other single-phase rectifier unit in the phase-B rectifier circuit; 12c1: one single-phase rectifier unit in the phase-C rectifier circuit; 12c2: the other single-phase rectifier unit in the phase-C rectifier circuit; 13: three-phase inverter circuit; 14: charge/discharge circuit; Input A: phase-A alternating current input end; Input B: phase-B alternating current input end; Input C: phase-C alternating current input end; F1a, F1b, and F1c: first fuses; F2a, F2b, and F2c: second fuses; Bat+: positive electrode of an energy storage apparatus; Bat-: negative electrode of the energy storage apparatus; N: neutral wire; +BUS: positive bus; -BUS: negative bus; C1: first capacitor; C2: second capacitor; T1a, T1b, T1c, T3a, T3b, and T3c: mains switches; T2a, T2b, and T2c: positive energy storage switches; T4a, T4b, and T4c: negative energy storage switches; L1a1, L1a2, L1b1, L1b2, L1c1, and L1c2: first inductors; Q1a1, Q1a2, Q1b1, Q1b2, Q1c1, and Q1c2: first switch transistors; Q2a1, Q2a2, Q2b1, Q2b2, Q2c1, and Q2c2: second switch transistors; D1a1, D1a2, D1b1, D1b2, D1c1, and D1c2: first diodes; D2a1, D2a2, D2b1, D2b2, D2c1, and D2c2: second diodes; L2: second inductor; L3: third inductor; Q3: third switch transistor; Q4: fourth switch transistor; Q5: fifth switch transistor; C11: third capacitor; C12: fourth capacitor.

### DESCRIPTION OF EMBODIMENTS

The following describes the technical solutions in embodiments of this application with reference to the accompanying drawings in embodiments of this application. It is clear that the described embodiments are merely some embodiments rather than all of embodiments of this application.

The terms such as "first" and "second" below are only for ease of description, and cannot be understood as indicating or implying relative importance or implicitly indicating a quantity of indicated technical features. Therefore, a feature limited by "first", "second", or the like may explicitly or implicitly include one or more features. In the descriptions of this application, unless otherwise stated, "a plurality of" means two or more than two.

In addition, in embodiments of this application, orientation terms such as "up", "down", "left", and "right" may include but are not limited to definitions based on illustrated orientations in which components in the accompanying drawings are placed. It should be understood that, these directional terms may be relative concepts, are used for relative description and clarification, and may correspondingly change based on changes in the orientations in which the components in the accompanying drawings are placed in the accompanying drawings.

In embodiments of this application, unless otherwise clearly specified and limited, a term "connection" should be understood in a broad sense. For example, the "connection" may be a fixed connection, a detachable connection, or an integrated connection, or may be a direct connection or an indirect connection implemented through an intermediate medium. In addition, the term "coupling" may be a direct electrical connection, or may be an indirect electrical connection through an intermediate medium. The term "contact" may be direct contact or indirect contact through an intermediate medium.

In embodiments of this application, the term "and/or" describes an association relationship between associated objects and may indicate that three relationships exist. For example, A and/or B may indicate the following cases: Only A exists, both A and B exist, and only B exists, where A and B may be singular or plural. The character "/" generally indicates an "or" relationship between the associated objects.

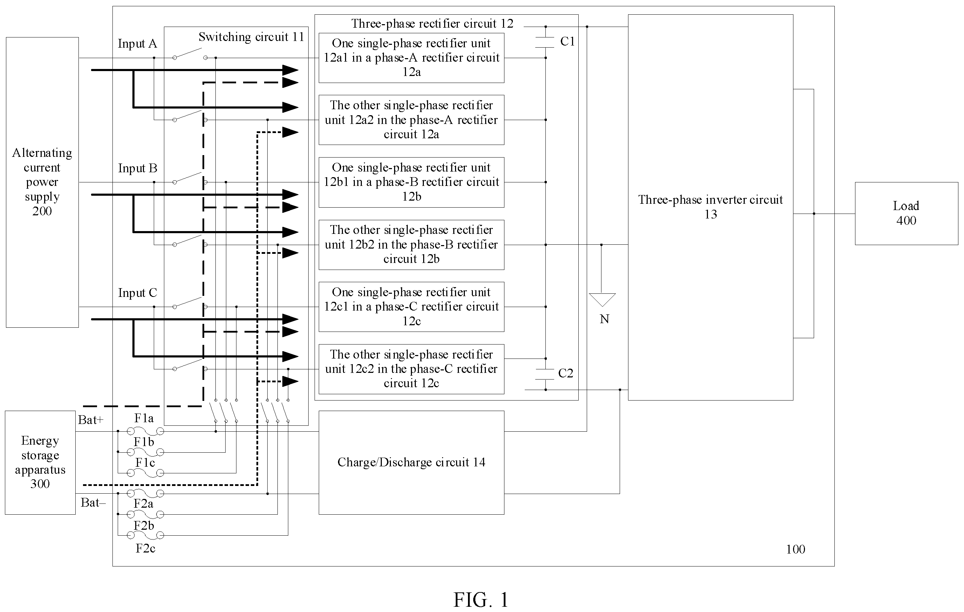

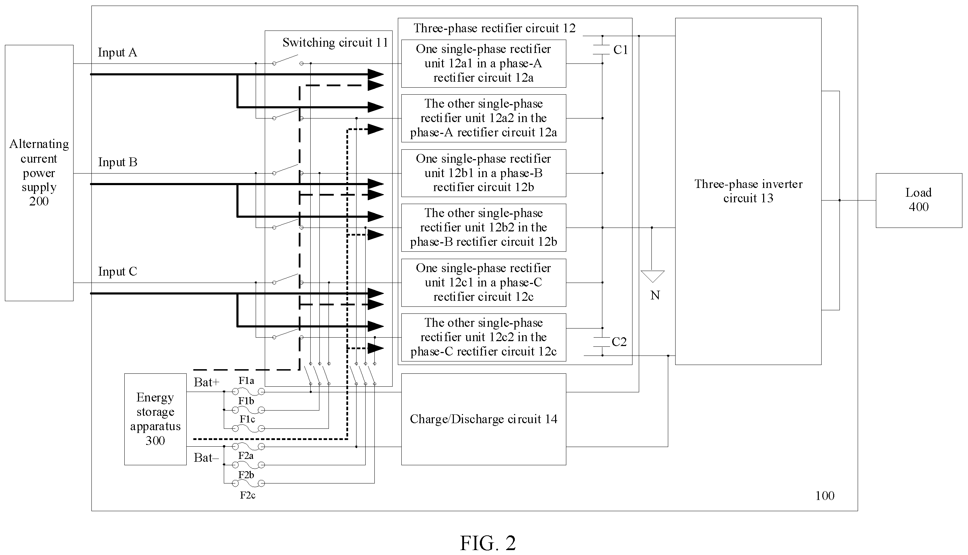

FIG. 1 schematically shows a diagram of a structure of an uninterruptible power supply system according to an embodiment of this application. FIG. 2 schematically shows a diagram of another structure of an uninterruptible power supply system according to an embodiment of this application.

Refer to FIG. 1 and FIG. 2. The uninterruptible power supply system 100 provided in embodiments of the present disclosure may specifically include three-phase alternating current input ends: Input A, Input B, and Input C, a three-phase rectifier circuit 12, a three-phase inverter circuit 13, a charge/discharge circuit 14, a switching circuit 11, at least two first fuses of F1a, F1b, and F1c, and at least two second fuses of F2a, F2b, and F2c. The three-phase alternating current input ends: Input A, Input B, and Input C are respectively configured to connect to phase-A, phase-B, and phase-C output ends of an alternating current power supply 200. The three-phase rectifier circuit 12 includes a phase-A rectifier circuit 12a, a phase-B rectifier circuit 12b, and a phase-C rectifier circuit 12c. The three-phase rectifier circuit 12 is configured to convert alternating currents input by the three-phase alternating current input ends: Input A, Input B, and Input C into direct currents. An output end of the three-phase rectifier circuit 12 is connected to an input end of the three-phase inverter circuit 13. The three-phase inverter circuit 13 is configured to convert the direct currents into alternating currents. An output end of the three-phase inverter circuit 13 is an output end of the uninterruptible power supply system 100.

The three-phase rectifier circuit 12 includes a first capacitor C1 and a second capacitor C2 that are connected between a positive bus +BUS and a negative bus -BUS and that are connected in series. Each phase rectifier circuit in the three-phase rectifier circuit 12 includes two single-phase rectifier units that are connected in parallel. Drive waveforms of the two single-phase rectifier units that are connected in parallel are staggered by half a cycle, so that most of high-frequency harmonics can be canceled out, thereby reducing a total proportion of the high-frequency harmonics. Specifically, the phase-A rectifier circuit 12a in the three-phase rectifier circuit 12 includes two single-phase rectifier units 12a1 and 12a2 that are connected in parallel. The phase-B rectifier circuit 12b includes two single-phase rectifier units 12b1 and 12b2 that are connected in parallel. The phase-C rectifier circuit 12c includes two single-phase rectifier units 12c1 and 12c2 that are connected in parallel. An output end of each of the single-phase rectifier units 12a1, 12a2, 12b1, 12b2, 12c1, and 12c2 is connected to a connection point of the first capacitor C1 and the second capacitor C2. Input ends of the two single-phase rectifier units 12a1 and 12a2 in the phase-A rectifier circuit 12a are both connected to the phase-A alternating current input end Input A through the switching circuit 11. Input ends of the two single-phase rectifier units 12b1 and 12b2 in the phase-B rectifier circuit 12b are both connected to the phase-B alternating current input end Input B through the switching circuit 11. Input ends of the two single-phase rectifier units 12c1 and 12c2 in the phase-C rectifier circuit 12c are both connected to the phase-C alternating current input end Input C through the switching circuit 11. In addition, the input end of the one single-phase rectifier unit 12a1 in the phase-A rectifier circuit 12a is connected to a positive electrode Bat+ of an energy storage apparatus 300 through the switching circuit 11. The input end of the other single-phase rectifier unit 12a2 in the phase-A rectifier circuit 12a is connected to a negative electrode Bat- of the energy storage apparatus 300 through the switching circuit 11. The input end of the one single-phase rectifier unit 12b1 in the phase-B rectifier circuit 12b is connected to the positive electrode Bat+ of the energy storage apparatus 300 through the switching circuit 11. The input end of the other single-phase rectifier unit 12b2 in the phase-B rectifier circuit 12b is connected to the negative electrode Bat- of the energy storage apparatus 300 through the switching circuit 11. The input end of the one single-phase rectifier unit 12c1 in the phase-C rectifier circuit 12c is connected to the positive electrode Bat+ of the energy storage apparatus 300 through the switching circuit 11. The input end of the other single-phase rectifier unit 12c2 in the phase-C rectifier circuit 12c is connected to the negative electrode Bat- of the energy storage apparatus 300 through the switching circuit 11. The energy storage apparatus 300 may be specifically a component, like a battery group, which has a charge/discharge function. During application of this application, with reference to FIG. 1, the energy storage apparatus 300 may be disposed inside the UPS system 100. With reference to FIG. 2, the energy storage apparatus 300 may alternatively be disposed outside the UPS system 100.

The switching circuit 11 is configured to switch between connecting lines (may be referred to as first lines for ease of description) (as shown by solid-line arrows) between the three-phase alternating current input ends: Input A, Input B, and Input C and the input ends of the single-phase rectifier units 12a1, 12a2, 12b1, 12b2, 12c1, and 12c2 in the three-phase rectifier circuit 12 and connecting lines (may be referred to as the first lines for ease of description) (as shown by dashed-line arrows) between the positive electrode Bat+ and the negative electrode Bat- of the energy storage apparatus 300 and the input ends of corresponding single-phase rectifier units of 12a1, 12a2, 12b1, 12b2, 12c1, and 12c2. That is, the switching circuit 12 is configured to disconnect the second lines in a state in which the first lines are connected, or disconnect the first lines in a state in which the second lines are connected.

One first fuse F1a, F1b, or F1c is separately connected in series to at least two phase lines in a three-phase second line between the positive electrode Bat+ of the energy storage apparatus 300 and the input end of the one single-phase rectifier unit 12a1, 12b1, or 12c1 in each phase rectifier circuit. One second fuse F2a, F2b, or F2c is separately connected in series to at least two phase lines in a three-phase line between the negative electrode Bat- of the energy storage apparatus 300 and the input end of the other single-phase rectifier unit 12a2, 12b2, or 12c2 in each phase rectifier circuit.

A first positive end of the charge/discharge circuit 14 is connected to the first fuse F1a. A first negative end of the charge/discharge circuit 14 is connected to the second fuse F2a. A second positive end of the charge/discharge circuit 14 is configured to connect to the positive bus +BUS. A second negative end of the charge/discharge circuit 14 is configured to connect to the negative bus -BUS.

In this application, different first fuses 12a1, 12b1, and 12c1 and second fuses F2a, F2b, and F2c are connected in series to different second lines. In this way, after being connected to the uninterruptible power supply system 100, the positive electrode and the negative electrode of the energy storage apparatus 300 are separately divided to at least two lines from one line. After a fuse on one line is blown, another line may maintain a connected state, so that specifications of a fuse current of a single fuse can be reduced, and small fuse specifications can be used in the uninterruptible power supply system 100 to better protect a component in a circuit.

In embodiments of this application, the switching circuit 11 may include a relay T or another non-semiconductor switch device. The three-phase rectifier circuit 12, the three-phase inverter circuit 13, and the charge/discharge circuit 14 may include devices like switch transistors Q, diodes D, inductors L, and capacitors C. Working states of the switching circuit 11, the three-phase rectifier circuit 12, the three-phase inverter circuit 13, and the charge/discharge circuit 14 may be implemented by adjusting working states of these devices. Specifically, a controller may be used to adjust the working states of the foregoing devices, that is, the uninterruptible power supply system 100 may further include a controller. The controller controls a connection/disconnection state of the switching circuit 11, control the three-phase rectifier circuit 12 to convert received electric energy into direct currents to supply power to the positive bus +BUS and the negative bus -BUS, control the three-phase inverter circuit 13 to convert the direct currents on the positive bus +BUS and the negative bus -BUS into alternating currents, and controls a charging/discharging state of the charge/discharge circuit 14. In a specific implementation, the controller may be any one of a micro control unit (micro controller unit, MCU), a central processing unit (central processing unit, CPU), and a digital signal processor (digital signal processor, DSP). Certainly, a specific form of the controller is not limited to the foregoing example.

When the alternating currents input by the three-phase alternating current input ends: Input A, Input B, and Input C are normal, for example, voltage amplitudes of alternating currents received by the three-phase alternating current input ends: Input A, Input B, and Input C are determined to be within a specified threshold range to determine that the alternating currents are normal. The uninterruptible power supply system 100 provided in embodiments of this application is in a mode of supplying power through mains electricity. The controller may control the switching circuit 11 to connect the alternating current power supply 200, that is, the first lines between the three-phase alternating current input ends: Input A, Input B, and Input C and input ends of the three-phase rectifier circuit 12, and disconnect the second lines between the energy storage apparatus 300 and the input ends of the three-phase rectifier circuit 12. The controller may control the three-phase rectifier circuit 12 to convert the received alternating currents input by the three-phase alternating current input ends: Input A, Input B, and Input C into direct currents to supply power to the positive bus +BUS and the negative bus -BUS, control the three-phase inverter circuit 13 to convert the direct currents on the positive bus +BUS and the negative bus -BUS into alternating currents and supply power to a load 400, and control the charge/discharge circuit 14 to be in the charging state to charge the direct currents on the positive bus +BUS and the negative bus -BUS to the energy storage apparatus 300.

When one of the alternating currents input by the three-phase alternating current input ends: Input A, Input B, and Input C is faulty, for example, a voltage amplitude of at least one-phase alternating current received by the three-phase alternating current input ends: Input A, Input B, and Input C is beyond the specified threshold range to determine that the alternating current is faulty. The fault may be caused by an alternating current interruption, a power failure due to an accident, or the like. The uninterruptible power supply system 100 provided in embodiments of this application may switch from the mode of supplying power through mains electricity to a mode of supplying power through the energy storage apparatus. The controller may control the charge/discharge circuit 14 to quickly switch from the charging state to the discharging state, that is, control the charge/discharge circuit 14 to discharge electric energy stored in the energy storage apparatus 300 to the positive bus +BUS and the negative bus -BUS, and quickly reversely supply power to the positive bus +BUS and the negative bus -BUS. Because control and switching of only internal switch transistors in the charge/discharge circuit 14 are involved, this control and switching process is extremely fast, and the switching can be completed within dozens of µs, to ensure that the power failure does not occur in the direct currents on the positive bus +BUS and the negative bus -BUS. When the controller controls the charge/discharge circuit 14 to supply power to the positive bus +BUS and the negative bus -BUS, the controller further controls the three-phase rectifier circuit 12 to stop working. Specifically, when it is detected that currents of inductors in the three-phase rectifier circuit 12 freewheel to values close to zero, it may be determined that the three-phase rectifier circuit 12 stops working. After the three-phase rectifier circuit 12 stops working, the controller may control the switching circuit 11 to switch the first lines between the alternating current power supply 200 and the input ends of the three-phase rectifier circuit 12 from the connected state to the disconnected state, and then switch the second lines between the positive electrode and the negative electrode of the energy storage apparatus 300 and the input ends of the three-phase rectifier circuit 12 from the disconnected state to the connected state. In this way, the electric energy output by the energy storage apparatus 300 is input to the three-phase rectifier circuit 12, and the uninterruptible power supply system 100 starts working in the mode of supplying power through the energy storage apparatus. In addition, after the uninterruptible power supply system 100 starts to work in the mode of supplying power through the energy storage apparatus, the controller may further control the charge/discharge circuit 14 to stop working for reversely supplying power to the positive bus +BUS and the negative bus -BUS. The three-phase rectifier circuit 12 may perform power conversion on the electric energy received from the energy storage apparatus 300 and output obtained electric energy to the positive bus +BUS and the negative bus -BUS. The three-phase inverter circuit 13 converts the electric energy on the positive bus +BUS and the negative bus -BUS into alternating currents and outputs the alternating currents to the load 400.

When the alternating currents input by the three-phase alternating current input ends: Input A, Input B, and Input C are restored, the uninterruptible power supply system 100 provided in embodiments of this application switches from the mode of supplying power through the energy storage apparatus to the mode of supplying power through mains electricity. The controller may control the charge/discharge circuit 14 to discharge the electric energy stored in the energy storage apparatus 300 to the positive bus +BUS and the negative bus -BUS, and the energy storage apparatus 300 is used to supplement energy for the positive bus +BUS and the negative bus -BUS through the charge/discharge circuit 14. This ensures that the power failure does not occur in the direct currents on the positive bus +BUS and the negative bus -BUS in a process of switching to the mode of supplying power through mains electricity. When the controller controls the charge/discharge circuit 14 to supply power to the positive bus +BUS and the negative bus -BUS, the controller further controls the three-phase rectifier circuit to stop working. Specifically, when it is detected that currents of inductors in the three-phase rectifier circuit 12 freewheel to values close to zero, it may be determined that the three-phase rectifier circuit 12 stops working. After the three-phase rectifier circuit 12 stops working, the controller may control the switching circuit 11 to switch the second lines between the positive electrode and the negative electrode of the energy storage apparatus 300 and the input ends of the three-phase rectifier circuit 12 from the connected state to the disconnected state, and then switch the first lines between the alternating current power supply 200 and the input ends of the three-phase rectifier circuit 12 from the disconnected state to the connected state. In this way, the uninterruptible power supply system 100 starts working in the mode of supplying power through the mains electricity. After the uninterruptible power supply system 100 starts working in the mode of supplying power through the mains electricity, the controller may control the three-phase rectifier circuit 12 to convert alternating currents into direct currents and output the direct currents to the positive bus +BUS and the negative bus - BUS, and control the three-phase inverter circuit 13 to convert the direct currents on the positive bus +BUS and the negative bus -BUS into alternating currents and output the alternating currents to the load 400. In addition, the controller may control the charge/discharge circuit 14 to stop working for reversely supplying power to the positive bus +BUS and the negative bus -BUS, and may further control the charge/discharge circuit 14 to charge the electric energy on the positive bus +BUS and the negative bus -BUS to the energy storage apparatus 300.

In embodiments of this application, the switching circuit 11 usually includes a plurality of switches, and the switches may be specifically implemented by using relays. Based on characteristics of the switches, a switching process needs to take several ms to dozens of ms. In other words, time for the charge/discharge circuit 14 to work for reversely supplying power to the positive bus +BUS and the negative bus -BUS needs only several ms to dozens of ms. Because the time for the charge/discharge circuit 14 to work for reversely supplying power to the positive bus +BUS and the negative bus -BUS is short, when the charge/discharge circuit 14 reversely supplies power, that is, when the charge/discharge circuit 14 discharges the electric energy stored in the energy storage apparatus 300 to the positive bus +BUS and the negative bus -BUS, the charge/discharge circuit 14 may work at a power that exceeds a rated power. For example, an actual discharge power of the charge/discharge circuit 14 is twice higher than a rated discharge power of the charge/discharge circuit 14, to reduce current specifications of a circuit component, thereby reducing costs and a volume.

In this embodiment of this application, a plurality of F1a, F1b, and F1c and a plurality of second fuses F2a, F2b, and F2c are disposed. In this way, after being connected to the uninterruptible power supply system 100, the positive electrode and the negative electrode of the energy storage apparatus 300 are divided to at least two lines from one line, so that specifications of a fuse current of a single fuse can be reduced, and small fuse specifications can be used in the uninterruptible power supply system 100 to better protect a component in a circuit. In both the mode of supplying power through mains electricity and the mode of supplying power through the energy storage apparatus, the three-phase rectifier circuit 12 is in the working state. That is, in the mode of supplying power through mains electricity and the mode of supplying power through the energy storage apparatus, the three-phase rectifier circuit 12 shares a topology, which can reduce the volume and the costs of the circuit. In addition, the two single-phase rectifier units, 12a1 and 12a2, 12b1 and 12b2, or 12c1 and 12c2, which are respectively included in each phase rectifier circuit 12a, 12b, or 12c, are disposed in parallel. Drive waveforms of the two single-phase rectifier units, 12a1 and 12a2, 12b1 and 12b2, or 12c1 and 12c2, are staggered by half a cycle, so that most of high-frequency harmonics can be canceled out, thereby reducing a total proportion of the high-frequency harmonics. The charge/discharge circuit 14 may be used as a charge circuit and a discharge circuit, and a topology of the charge/discharge circuit 14 is fully used, which can reduce the volume and the costs of the circuit. In addition, the charge/discharge circuit 14 reversely supplies power to the positive bus +BUS and the negative bus -BUS for a short time, to support the switching circuit 11 in supplying energy to the positive bus +BUS and the negative bus -BUS in a process of switching between the mode of supplying power through mains electricity and the mode of supplying power through the energy storage apparatus, so that the power that is reversely supplied by the charge/discharge circuit 14 can be applied at a power that exceeds a rated power. For example, an actual discharge power of the charge/discharge circuit 14 is twice higher than the rated discharge power of the charge/discharge circuit 14, to reduce current specifications of a circuit component, thereby reducing costs and a volume.

The following describes specific structures of the switching circuit 11, the first fuses F1a, F1b, and F1c, the second fuses F2a, F2b, and F2c, the three-phase rectifier circuit 12, and the charge/discharge circuit 14 in the uninterruptible power supply system 100.

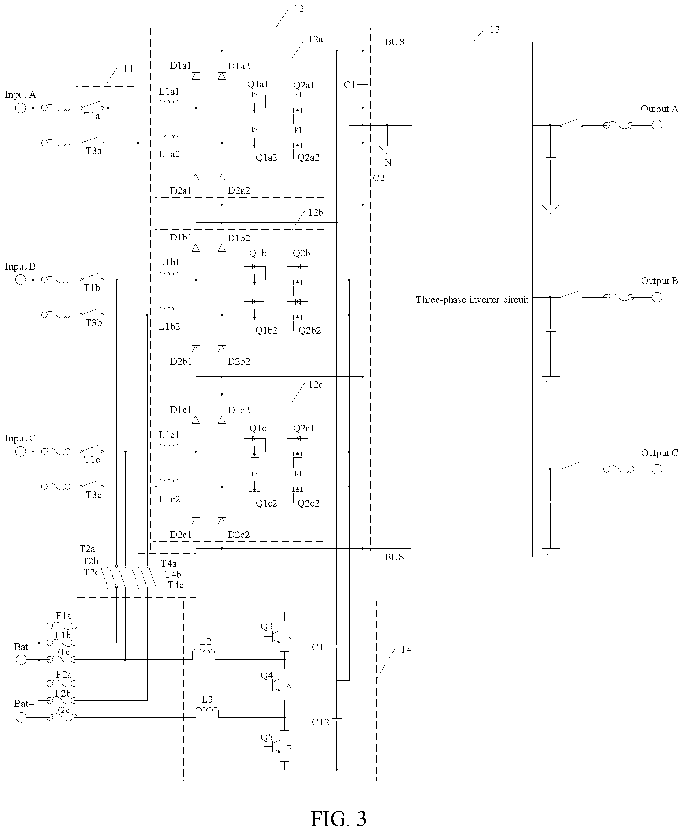

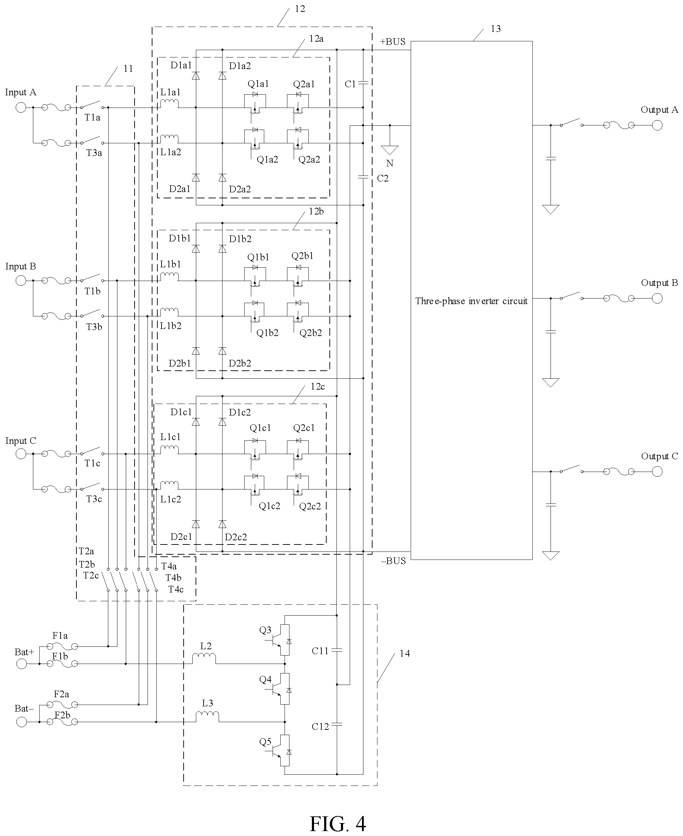

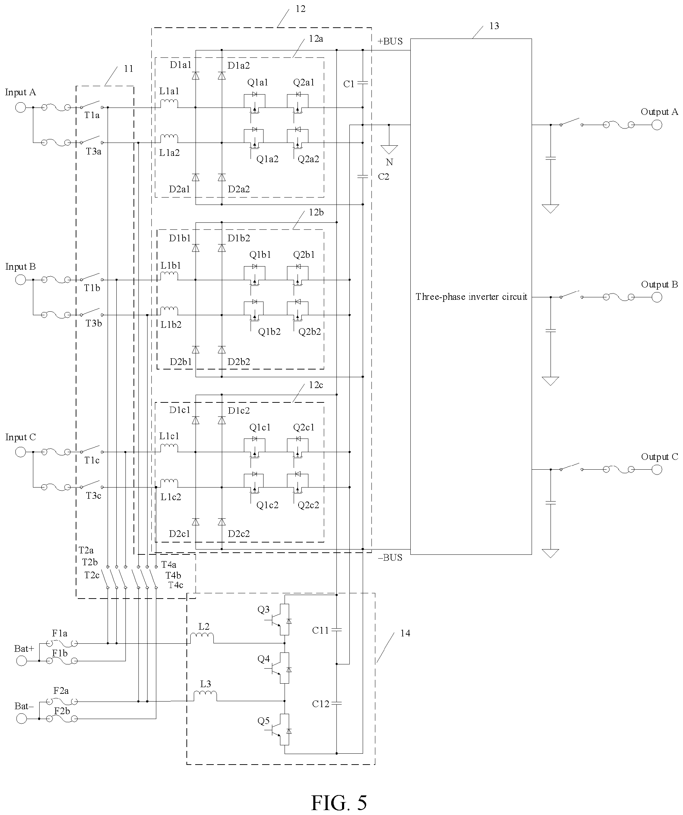

FIG. 3 schematically shows a diagram of a specific circuit structure of an uninterruptible power supply system according to an embodiment of this application. FIG. 4 schematically shows a diagram of another specific circuit structure of an uninterruptible power supply system according to an embodiment of this application. FIG. 5 schematically shows a diagram of still another specific circuit structure of an uninterruptible power supply system according to an embodiment of this application.

Refer to FIG. 3 and FIG. 5. In some embodiments of this application, the switching circuit 11 may specifically include: mains switches T1a, T1b, T1c, T3a, T3b, and T3c that are located between the three-phase alternating current input ends: Input A, Input B, and Input C and the input end of each phase rectifier circuit 12a, 12b, or 12c; positive energy storage switches T2a, T2b, and T2c that are located on each phase second line between the positive electrode Bat+ of the energy storage apparatus 300 and the input end of the one single-phase rectifier unit 12a1, 12b1, or 12c1 in each phase rectifier circuit 12a, 12b, or 12c; and negative energy storage switches T4a, T4b, and T4c that are located on each phase second line between the negative electrode Bat- of the energy storage apparatus 300 and the input end of the other single-phase rectifier unit 12a2, 12b2, or 12c2 in each phase rectifier circuit 12a, 12b, or 12c.

The input end of the one single-phase rectifier unit 12a1 in the phase-A rectifier circuit 12a is connected to the phase-A alternating current input end Input A through the mains switch T1a. The mains switch T1a may control the connected/disconnected state of the line between the phase-A alternating current input end Input A and the input end of the one single-phase rectifier unit 12a1 in the phase-A rectifier circuit 12a. In addition, the input end of the one single-phase rectifier unit 12a1 in the phase-A rectifier circuit 12a is connected to the first fuse F1a through the positive energy storage switch T2a. The positive energy storage switch T2a may control the connected/disconnected state of the line between the positive electrode Bat+ of the energy storage apparatus 300 and the input end of the one single-phase rectifier unit 12a1 in the phase-A rectifier circuit 12a. The input end of the other single-phase rectifier unit 12a2 in the phase-A rectifier circuit 12a is connected to the phase-A alternating current input end Input A through the mains switch T3a. The mains switch T3a may control the connected/disconnected state of the line between the phase-A alternating current input end Input A and the input end of the other single-phase rectifier unit 12a2 in the phase-A rectifier circuit 12a. In addition, the input end of the other single-phase rectifier unit 12a2 in the phase-A rectifier circuit 12a is connected to the second fuse F2a through the negative energy storage switch T4a. The mains switch T4a may control the connected/disconnected state of the line between the negative electrode Bat- of the energy storage apparatus 300 and the input end of the other single-phase rectifier unit 12a2 in the phase-A rectifier circuit 12a.

The input end of the one single-phase rectifier unit 12b1 in the phase-B rectifier circuit 12b is connected to the phase-B alternating current input end Input B through the mains switch T1b. The mains switch T1b may control the connected/disconnected state of the line between the phase-B alternating current input end Input B and the input end of the one single-phase rectifier unit 12b1 in the phase-B rectifier circuit 12b. In addition, the input end of the one single-phase rectifier unit 12b1 in the phase-B rectifier circuit 12b is connected to the first fuse F1a or F1b through the positive energy storage switch T2b. The negative energy storage switch T2b may control the connected/disconnected state of the line between the positive electrode Bat+ of the energy storage apparatus 300 and the input end of the one single-phase rectifier unit 12b1 in the phase-B rectifier circuit 12b. With reference to FIG. 3, the positive energy storage switches T2a and T2b may be respectively connected to different first fuses F1a and F1b. Alternatively, with reference to FIG. 4 and FIG. 5, the positive energy storage switches T2a and T2b may also be connected to one same first fuse F1a. The input end of the other single-phase rectifier unit 12b2 in the phase-B rectifier circuit 12b is connected to the phase-B alternating current input end Input B through the mains switch T3b. The mains switch T3b may control the connected/disconnected state of the line between the phase-B alternating current input end Input B and the input end of the other single-phase rectifier unit 12b2 in the phase-B rectifier circuit 12b. In addition, the input end of the other single-phase rectifier unit 12b2 in the phase-B rectifier circuit 12b is connected to the second fuse F2a or F2b through the negative energy storage switch T4b. The negative energy storage switch T4b may control the connected/disconnected state of the line between the negative electrode Bat- of the energy storage apparatus 300 and the input end of the other single-phase rectifier unit 12b2 in the phase-B rectifier circuit 12b. With reference to FIG. 3, the negative energy storage switches T4a and T4b may be respectively connected to different second fuses F2a and F2b. Alternatively, with reference to FIG. 4 and FIG. 5, the negative energy storage switches T4a and T4b may also be connected to one same second fuse F2a.

The input end of the one single-phase rectifier unit 12c1 in the phase-C rectifier circuit 12c is connected to the phase-C alternating current input end Input C through the mains switch T1c. The mains switch T1c may control the connected/disconnected state of the line between the phase-C alternating current input end Input C and the input end of the one single-phase rectifier unit 12c1 in the phase-C rectifier circuit 12c. In addition, the input end of the one single-phase rectifier unit 12c1 in the phase-C rectifier circuit 12c is connected to the first fuse F1b or F1c through the positive energy storage switch T2c. The positive energy storage switch T2c may control the connected/disconnected state of the line between the positive electrode Bat+ of the energy storage apparatus 300 and the input end of the one single-phase rectifier unit 12c1 in the phase-C rectifier circuit 12c. With reference to FIG. 3, the positive energy storage switches T2a, T2b, and T2c may be respectively connected to different first fuses F1a, F1b, and F1c. Alternatively, with reference to FIG. 4 and FIG. 5, the positive energy storage switches T2a and T2b are connected to one same first fuse F1a, and the positive energy storage switch T2b is connected to the first fuse F1b, or the positive energy storage switches T2b and T2c are connected to one same first fuse F1b, and the positive energy storage switch T2a is connected to the first fuse F1a. The input end of the other single-phase rectifier unit 12c2 in the phase-C rectifier circuit 12c is connected to the phase-C alternating current input end Input C through the mains switch T3c. The mains switch T3c may control the connected/disconnected state of the line between the phase-C alternating current input end Input C and the input end of the other single-phase rectifier unit 12c2 in the phase-C rectifier circuit 12c. In addition, the input end of the other single-phase rectifier unit 12c2 in the phase-C rectifier circuit 12c is connected to the second fuse F2b or F2c through the negative energy storage switch T4c. The negative energy storage switch T4c may control the connected/disconnected state of the line between the negative electrode Bat- of the energy storage apparatus 300 and the input end of the other single-phase rectifier unit 12c2 in the phase-C rectifier circuit 12c. With reference to FIG. 3, the negative energy storage switches T4a, T4b, and T4c may be respectively connected to different second fuses F2a, F2b, and F2c. Alternatively, with reference to FIG. 4 and FIG. 5, the negative energy storage switches T4a and T4b may also be connected to one same second fuse F2a, and the negative energy storage switch T4c may be connected to the second fuse F2b, or the negative energy storage switches T4b and T4c may also be connected to one same second fuse F2b, and the negative energy storage switch T4a may also be connected to the second fuse F2a.

Refer to FIG. 3. In some embodiments of this application, the uninterruptible power supply system 100 specifically includes three first fuses F1a, F1b, and F1c. One first fuse F1a, F1b, or F1c is connected in series to each line in the second line between the positive electrode Bat+ of the energy storage apparatus 300 and the input end of the one single-phase rectifier unit 12a1, 12b1, or 12c1 in each phase rectifier circuit 12a, 12b, or 12c. In addition, the positive electrode Bat+ of the energy storage apparatus 300 is separately connected in series to the first fuses F1a, F1b, and F1c, and then is connected in series to the positive energy storage switches T2a, T2b, and T2c. To be specific, the first fuses F1a, F1b, and F1c are connected to the positive energy storage switches T2a, T2b, and T2c in a one-to-one correspondence, and any one of the first fuse F1a, F1b, or F1c is connected to the first positive end of the charge/discharge circuit 14. In FIG. 3, an example in which the first fuse F1a is connected to the first positive end of the charge/discharge circuit 14 is used for description.

Refer to FIG. 4 and FIG. 5. In some other embodiments of this application, the uninterruptible power supply system 100 may also include two first fuses F1a and F1b. One same first fuse F1a is connected in series to two phase line lines in the second line between the positive electrode Bat+ of the energy storage apparatus 300 and the input end of the one single-phase rectifier units 12a1, 12b1, or 12c1 in each phase rectifier circuit 12a, 12b, or 12c. The other first fuse F1b is connected in series to the other line. In addition, the positive electrode Bat+ of the energy storage apparatus 300 is separately connected in series to the first fuses F1a and F1b, and then is connected in series to the positive energy storage switches T2a, T2b, and T2c. That is, the first fuse F1a is connected to two positive energy storage switches T2a and T2b, and the first fuse F1b is connected to the positive energy storage switch T2c. With reference to FIG. 5, one first fuse F1a may be connected to the first positive end of the charge/discharge circuit 14. Alternatively, with reference to FIG. 4, the other first fuse F1b may be connected to the first positive end of the charge/discharge circuit 14.

Similarly, refer to FIG. 3. In some embodiments of this application, the uninterruptible power supply system 100 may specifically include three second fuses F2a, F2b, and F2c. One second fuse F2a, F2b, or F2c is connected in series to each line in the second line between the negative electrode Bat- of the energy storage apparatus 300 and the input end of the other single-phase rectifier unit 12a2, 12b2, or 12c2 in each phase rectifier circuit 12a, 12b, or 12c. In addition, the negative electrode Bat- of the energy storage apparatus 300 is separately connected in series to the second fuses F2a, F2b, and F2c, and then is connected in series to the negative energy storage switches T4a, T4b, and T4c. To be specific, the second fuses F2a, F2b, and F2c are connected to fourth switches T4a, T4b, and T4c in a one-to-one correspondence, and any one of the second fuses F2a, F2b, and F2c is connected to the first negative end of the charge/discharge circuit 14. In FIG. 3, an example in which the second fuse F2a is connected to the first negative end of the charge/discharge circuit 14 is used for description.

Refer to FIG. 4 and FIG. 5. In some other embodiments of this application, the uninterruptible power supply system 100 may also include two second fuses F2a and F2b. One same second fuse F2a is connected in series to two phase line in the second line between the negative electrode Bat- of the energy storage apparatus 300 and the input end of the one single-phase rectifier unit 12a2, 12b2, or 12c2 in each phase rectifier circuit 12a, 12b, or 12c. The other second fuse F2b is connected in series to the other line. In addition, the negative electrode Bat- of the energy storage apparatus 300 is separately connected in series to the second fuses F2a and F2b, and then is connected in series to the negative energy storage switches T2a, T2b, and T2c. That is, the second fuse F2a is connected to two negative energy storage switches T4a and T4b, and the second fuse F2b is connected to the negative energy storage switch T4c. With reference to FIG. 5, one second fuse F2a is connected to the first negative end of the charge/discharge circuit 14. Alternatively, with reference to FIG. 4, the second fuse F2b is connected to the first negative end of the charge/discharge circuit 14.

Refer to FIG. 3 to FIG. 5. In some embodiments of this application, the first capacitor C1 and the second capacitor C2 in the three-phase rectifier circuit 12 are connected in series between the positive bus +BUS and the negative bus -BUS. In addition, a midpoint, that is, a connection point, of the first capacitor C1 and the second capacitor C2 is connected to a neutral wire N. The positive bus +BUS is configured to transmit a positive direct current, and the negative bus -BUS is configured to transmit a negative direct current. The first capacitor C1 is configured to store electric energy of the positive bus +BUS, and the second capacitor C2 is configured to store electric energy of the negative bus -BUS. In actual use, the inverter circuit 13 converts the electric energy stored in the first capacitor C1 into a positive half-cycle signal of a second alternating current, and the inverter circuit 13 converts the electric energy stored in the second capacitor C2 into a negative half-cycle signal of an alternating current.

Refer to FIG. 3 to FIG. 5. In some embodiments of this application, every two single-phase rectifier units 12a1 and 12a2, 12b1 and 12b2, or 12c1 and 12c2 in each phase rectifier circuit 12a, 12b, or 12c may specifically include: first inductors L1a1 and L1a2, L1b1 and L1b2, or L1c1 and L1c2; first switch transistors Q1a1 and Q1a2, Q1b1 and Q1b2, or Q1c1 and Q1c2; second switch transistors Q2a1 and Q2a2, Q2b1 and Q2b2, or Q2c1 and Q2c2; first diodes D1a1 and D1a2, D1b1 and D1b2, or D1c1 and D1c2; and second diodes D2a1 and D2a2, D2b1 and D2b2, or D2c1 and D2c2.

Specifically, the one single-phase rectifier unit 12a1 in the phase-A rectifier circuit 12a may specifically include the first inductor L1a1, the first switch transistor Q1a1, the second switch transistor Q2a1, the first diode D1a1, and the second diode D2a1. A first end of the first inductor L1a1 is separately connected to the first switch T1a1 and the second switch T2a1, and a second end of the first inductor L1a1 is connected to a first electrode of the first switch transistor Q1a1. A second electrode of the first switch transistor Q1a1 is connected to a second electrode of the second switch transistor Q2a1, and a first electrode of the second switch transistor Q2a1 is connected to the neutral wire N. A positive electrode of the first diode D1a1 is connected to the second end of the first inductor L1a1, and a negative electrode of the first diode D1a1 is connected to the positive bus +BUS. A positive electrode of the second diode D2a1 is connected to the negative bus -BUS, and a negative electrode of the second diode D2a1 is connected to the second end of the first inductor L1a1.

The other single-phase rectifier unit 12a2 in the phase-A rectifier circuit 12a may specifically include the first inductor L1a2, the first switch transistor Q1a2, the second switch transistor Q2a2, the first diode D1a2, and the second diode D2a2. A first end of the first inductor L1a2 is separately connected to the first switch T1a2 and the second switch T2a2, and a second end of the first inductor L1a2 is connected to a first electrode of the first switch transistor Q1a2. A second electrode of the first switch transistor Q1a2 is connected to a second electrode of the second switch transistor Q2a2, and a first electrode of the second switch transistor Q2a2 is connected to the neutral wire N. A positive electrode of the first diode D1a2 is connected to the second end of the first inductor L1a2, and a negative electrode of the first diode D1a2 is connected to the positive bus +BUS. A positive electrode of the second diode D2a2 is connected to the negative bus -BUS, and a negative electrode of the second diode D2a2 is connected to the second end of the first inductor L1a2.

The one single-phase rectifier unit 12b1 in the phase-B rectifier circuit 12b may specifically include the first inductor L1b1, the first switch transistor Q1b1, the second switch transistor Q2b1, the first diode D1b1, and the second diode D2b1. A first end of the first inductor L1b1 is separately connected to the first switch T1b1 and the second switch T2b1, and a second end of the first inductor L1b1 is connected to a first electrode of the first switch transistor Q1b1. A second electrode of the first switch transistor Q1b1 is connected to a second electrode of the second switch transistor Q2b1, and a first electrode of the second switch transistor Q2b1 is connected to the neutral wire N. A positive electrode of the first diode D1b1 is connected to the second end of the first inductor L1b1, and a negative electrode of the first diode D1b1 is connected to the positive bus +BUS. A positive electrode of the second diode D2b1 is connected to the negative bus -BUS, and a negative electrode of the second diode D2b1 is connected to the second end of the first inductor L1b1.

The other single-phase rectifier unit 12b2 in the phase-B rectifier circuit 12b may specifically include the first inductor L1b2, the first switch transistor Q1b2, the second switch transistor Q2b2, the first diode D1b2, and the second diode D2b2. A first end of the first inductor L1b2 is separately connected to the first switch T1b2 and the second switch T2b2, and a second end of the first inductor L1b2 is connected to a first electrode of the first switch transistor Q1b2. A second electrode of the first switch transistor Q1b2 is connected to a second electrode of the second switch transistor Q2b2, and a first electrode of the second switch transistor Q2b2 is connected to the neutral wire N. A positive electrode of the first diode D1b2 is connected to the second end of the first inductor L1b2, and a negative electrode of the first diode D1b2 is connected to the positive bus +BUS. A positive electrode of the second diode D2b2 is connected to the negative bus -BUS, and a negative electrode of the second diode D2b2 is connected to the second end of the first inductor L1b2.

The one single-phase rectifier unit 12c1 in the phase-C rectifier circuit 12c may specifically include the first inductor L1c1, the first switch transistor Q1c1, the second switch transistor Q2c1, the first diode D1c1, and the second diode D2c1. A first end of the first inductor L1c1 is separately connected to the first switch T1c1 and the second switch T2c1, and a second end of the first inductor L1c1 is connected to a first electrode of the first switch transistor Q1c1. A second electrode of the first switch transistor Q1c1 is connected to a second electrode of the second switch transistor Q2c1, and a first electrode of the second switch transistor Q2c1 is connected to the neutral wire N. A positive electrode of the first diode D1c1 is connected to the second end of the first inductor L1c1, and a negative electrode of the first diode D1c1 is connected to the positive bus +BUS. A positive electrode of the second diode D2c1 is connected to the negative bus -BUS, and a negative electrode of the second diode D2c1 is connected to the second end of the first inductor L1c1.

The other single-phase rectifier unit 12c2 in the phase-C rectifier circuit 12c may specifically include the first inductor L1c2, the first switch transistor Q1c2, the second switch transistor Q2c2, the first diode D1c2, and the second diode D2c2. A first end of the first inductor L1c2 is separately connected to the first switch T1c2 and the second switch T2c2, and a second end of the first inductor L1c2 is connected to a first electrode of the first switch transistor Q1c2. A second electrode of the first switch transistor Q1c2 is connected to a second electrode of the second switch transistor Q2c2, and a first electrode of the second switch transistor Q2c2 is connected to the neutral wire N. A positive electrode of the first diode D1c2 is connected to the second end of the first inductor L1c2, and a negative electrode of the first diode D1c2 is connected to the positive bus +BUS. A positive electrode of the second diode D2c2 is connected to the negative bus -BUS, and a negative electrode of the second diode D2c2 is connected to the second end of the first inductor L1c2.

Refer to FIG. 3 to FIG. 5. In some embodiments of this application, the charge/discharge circuit 14 may include a second inductor L2, a third inductor L3, a third switch transistor Q3, a fourth switch transistor Q4, a fifth switch transistor Q5, a third capacitor C11, and a fourth capacitor C12. A first end of the second inductor L2 is connected to any one of the first fuse F1a, F1b, or F1c, and a second end of the second inductor L2 is separately connected to a first end of the third switch transistor Q3 and a second end of the fourth switch transistor Q4. A first end of the third inductor L3 is connected to any one of the second fuse F2a, F2b, or F2c, and a second end of the third inductor L3 is separately connected to a first end of the fourth switch transistor Q4 and a second end of the fifth switch transistor Q5. The third switch transistor Q3, the fourth switch transistor Q4, the third capacitor C11, and the fourth capacitor C12 may form a low-power charge/discharge circuit of a half-bridge topology. A power of the low-power charge/discharge circuit is approximately 30% of a power of a full-power charge/discharge circuit. However, the low-power charge/discharge circuit may achieve effect of the full-power charge/discharge circuit by working for a short time at a power that exceeds a rated power. Compared with the full-power charge/discharge circuit, costs and a volume of the low-power charge/discharge circuit may be reduced. Specifically, a second end of the third switch transistor Q3 is connected to the positive bus +BUS, and a first end of the fifth switch transistor Q5 is connected to the negative bus -BUS. The third capacitor C11 is connected between the positive bus +BUS and the neutral wire N, that is, the third capacitor C11 and the first capacitor C1 are disposed in parallel. The fourth capacitor C12 is connected between the negative bus -BUS and the neutral wire N, that is, the fourth capacitor C12 and the second capacitor C2 are disposed in parallel.

When the charge/discharge circuit 14 charges the electric energy on the positive bus +BUS and the negative bus -BUS to the energy storage apparatus 300, that is, when the charge/discharge circuit 14 is in the charging state, the fourth switch transistor Q4 is in a constant cut-off state, and the third switch transistor Q3 and the fifth switch transistor Q5 are in a state of switching between cutoff and conduction. When the charge/discharge circuit 14 discharges the electric energy stored in the energy storage apparatus 300 to the positive bus +BUS and the negative bus -BUS, that is, when the charge/discharge circuit 14 is in the discharging state, the fourth switch transistor Q4 is in the state of switching between cutoff and conduction after receiving a drive signal, and the third switch transistor Q3 and the fifth switch transistor Q5 are in the constant cut-off state. In addition, when the charge/discharge circuit 14 is in the discharging state, a discharge power of the charge/discharge circuit 14 may be controlled based on a duty cycle of the fourth switch transistor Q4. That is, the discharge power of the charge/discharge circuit 14 is reduced in a mode of reducing the duty cycle of the fourth switch transistor Q4.

In embodiments of this application, the three-phase inverter circuit 13 may use a two-level half-bridge topology, a T-type or I-type three-level half-bridge topology, or another topology.

A switch transistor in the three-phase rectifier circuit 12 and the charge/discharge circuit 14 provided in embodiments of this application may include a diode and a transistor that are connected in parallel. Specifically, the switch transistor may be a metal-oxide-semiconductor field-effect transistor (metal-oxide-semiconductor field-effect transistor, MOSFET), and the MOSFET naturally has a reverse diode function. Alternatively, the switch transistor may be an insulated-gate bipolar transistor (insulated-gate bipolar transistor, IGBT) or a bipolar junction transistor (bipolar junction transistor, BJT) with a built-in diode. Alternatively, the switch transistor may be an independent diode that is connected in parallel to a gallium nitride (GaN) field-effect transistor, a silicon carbide (SiC) power transistor, or one or more of a plurality of transistor devices. The switch transistor type is not enumerated in embodiments of this application.

Specifically, each switch transistor may include a first electrode (that is, a first end), a second electrode (that is, a second end), and a control electrode (that is, a control end). The control electrode is configured to control conduction or cutoff of the switch transistor. When the switch transistor is conducted, a current can be transmitted between the first electrode and the second electrode of the switch transistor. When the switching transistor is cut off, no current can be transmitted between the first electrode and the second electrode of the switch transistor. The MOSFET is used as an example. The control electrode of the switch transistor is a gate, the first electrode of the switch transistor may be a source of the switch transistor, and the second electrode may be a drain of the switch transistor. Alternatively, the first electrode may be a drain of the switch transistor, and the second electrode may be a source of the switch transistor.

In embodiments of this application, in a process in which the controller controls the charge/discharge circuit 14 to discharge the electric energy stored in the energy storage apparatus 300 to the positive bus +BUS and the negative bus -BUS, the controller may control, based on a current working temperature of the charge/discharge circuit 14, discharge duration in which the charge/discharge circuit 14 discharges the electric energy stored in the energy storage apparatus 300 to the positive bus +BUS and the negative bus -BUS. The controller may control the discharge duration in which the charge/discharge circuit 14 discharges electric energy stored in the energy storage apparatus 300 to the positive bus +BUS and the negative bus -BUS. The discharge duration is negatively correlated with the current working temperature of the charge/discharge circuit 14. Specifically, the current working temperature refers to a temperature of a heat sink that is configured to dissipate heat for the third switch transistor Q3, the fourth switch transistor Q4, the fifth switch transistor Q5, the third capacitor C11, and the fourth capacitor C12 of the charge/discharge circuit 14, or a temperature of the second inductor L2 and the third inductor L3, whose heat is dissipated independently, of the charge/discharge circuit 14. The working temperature represents a charge power of the charge/discharge circuit 14 before an alternating current is abnormal. If the charge power is higher, the working temperature is higher. The working temperature is negatively correlated with the discharge duration. That is, if the working temperature is higher, shorter discharge duration is required.

In embodiments of this application, in a process in which the controller controls the charge/discharge circuit 14 to discharge the electric energy stored in the energy storage apparatus 300 to the positive bus +BUS and the negative bus -BUS, the controller may control, based on a discharge power of the charge/discharge circuit 14, discharge duration in which the charge/discharge circuit 14 discharges the electric energy stored in the energy storage apparatus 300 to the positive bus +BUS and the negative bus -BUS. The controller may control the discharge duration in which the charge/discharge circuit 14 discharges electric energy stored in the energy storage apparatus 300 to the positive bus +BUS and the negative bus -BUS. The discharge duration is negatively correlated with the discharge power of the charge/discharge circuit 14. The discharge power may be represented by a discharge current integral. The discharge current integral refers to an integral of a discharge current I within the discharge duration of the charge/discharge circuit 14. The discharge current I represents a load rate. If the load rate is larger, a larger discharge current I is required. The discharge current integral is negatively correlated with the discharge duration. That is, if the discharge current integral is larger, shorter discharge duration is required. It can be learned that the discharge duration of the charge/discharge circuit 14 is not a fixed value but a variable value. When the load rate is small and a charge power is low before an alternating current is abnormal, the discharge duration may increase. If the discharge duration increases, it means that switching time of the switching circuit increases, which can improve reliability of a switching action in the switching circuit.

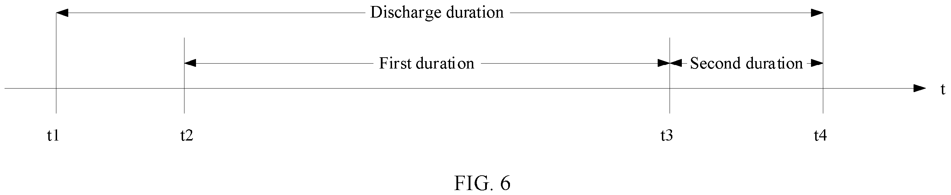

Refer to FIG. 6. In embodiments of this application, when one of the alternating currents input by the three-phase alternating current input ends: Input A, Input B, and Input C is faulty, a process in which the uninterruptible power supply system 100 switches from the mode of supplying power through mains electricity to the mode of supplying power through the energy storage apparatus includes a following switching time sequence.

At a first moment t1, it is detected that one of the alternating currents input by the three-phase alternating current input ends: Input A, Input B, and Input C is faulty, and the controller controls the charge/discharge circuit 14 to discharge the electric energy stored in the energy storage apparatus 300 to the positive bus +BUS and the negative bus -BUS. At the same time, the controller controls the three-phase rectifier circuit 12 to stop working, that is, controls the first switch transistors Q1a1, Q1a2, Q1b1, Q1b2, Q1c1, and Q1c2, and the second switch transistors Q2a1, Q2a2, Q2b1, Q2b2, Q2c1, and Q2c2 to be in the cut-off state.

At a second moment t2, currents of inductors in the three-phase rectifier circuit 12 freewheel to values close to zero, and the controller controls the mains switches T1a, T1b, T1c, T3a, T3b, and T3c to be turned off, so that the lines between the three-phase alternating current input ends: Input A, Input B, and Input C and the input ends of the three-phase rectifier circuit 12 are in the disconnected state.

At a third moment t3, the controller controls the positive energy storage switches T2a, T2b, and T2c and the negative energy storage switches T4a, T4b, and T4c to be turned on, so that the lines between the positive electrode and the negative electrode of the energy storage apparatus 300 and the input ends of the three-phase rectifier circuit 12 are in the connected state. First duration from the third moment t3 to the second moment t2 should be greater than shortest turn-off time ta of the switches, that is, t3 - t2 > ta. The first duration is duration from a moment at which the lines between the three-phase alternating current input ends and the input ends of single-phase rectifier units in the three-phase rectifier circuit are disconnected to a moment at which the lines between the positive electrode and the negative electrode of the energy storage apparatus and the input ends of the corresponding single-phase rectifier units are connected. Optionally, at the third moment t3, the discharge power of the charge/discharge circuit 14 may also be reduced.

At a fourth moment t4, the controller controls the charge/discharge circuit 14 to stop reversely working for supplying power to the positive bus +BUS and the negative bus -BUS. At the same time, the controller controls the three-phase rectifier circuit 12 to start working. Second duration from the fourth moment t4 to the third moment t3 should be greater than shortest turn-on time tb of the switches, that is, t4 - t3 > tb. The second duration is duration from a moment at which the lines between the positive electrode and the negative electrode of the energy storage apparatus and the input ends of the corresponding single-phase rectifier units are connected to a moment at which the charge/discharge circuit stops working.

In a process in which the uninterruptible power supply system 100 switches from the mode of supplying power through mains electricity to the mode of supplying power through the energy storage apparatus, the discharge duration in which the charge/discharge circuit 14 discharges the electric energy stored in the energy storage apparatus 300 to the positive bus +BUS and the negative bus - BUS is tx = t4 - t1. The discharge duration tx has a specified value range a1 ≤ tx ≤ b1, where a1 is mainly determined by the switching time of the switches, and b1 is mainly determined by a safety margin of the switching time of the switches. As described above, the discharge duration tx is not a fixed value but a variable value. The discharge duration tx is negatively correlated with both the working temperature and the discharge current integral. In addition, the first duration is positively correlated with the discharge duration tx of the charge/discharge circuit 14, and the second duration is positively correlated with the discharge duration tx of the charge/discharge circuit 14. When the load rate is small and the charge power is low before an alternating current is abnormal, the discharge duration tx increases. If the discharge duration tx increases, it means that both the first duration and the second duration increase, which can improve the reliability of the switch switching action in the switching circuit.

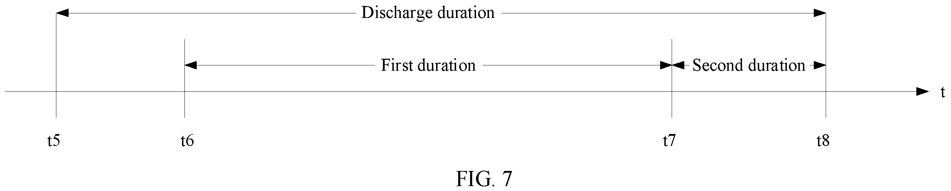

Refer to FIG. 7. In embodiments of this application, when the alternating currents input by the three-phase alternating current input ends: Input A, Input B, and Input C are restored, a process in which the uninterruptible power supply system 100 switches from the mode of supplying power through the energy storage apparatus to the mode of supplying power through mains electricity includes a following switching time sequence.

At a fifth moment t5, it is detected that the alternating currents input by the three-phase alternating current input ends: Input A, Input B, and Input C are restored, and the controller controls the charge/discharge circuit 14 to discharge the electric energy stored in the energy storage apparatus 300 to the positive bus +BUS and the negative bus -BUS. At the same time, the controller controls the three-phase rectifier circuit 12 to stop working, that is, controls the first switch transistors Q1a1, Q1a2, Q1b1, Q1b2, Q1c1, and Q1c2, and the second switch transistors Q2a1, Q2a2, Q2b1, Q2b2, Q2c1, and Q2c2 to be in the cut-off state.

At a sixth moment t6, the currents of the inductors in the three-phase rectifier circuit 12 freewheel to values close to zero, and the controller controls the positive energy storage switches T2a, T2b, and T2c and the negative energy storage switches T4a, T4b, and T4c to be turned off, so that the lines between the positive electrode and the negative electrode of the energy storage apparatus 300 and the input ends of the three-phase rectifier circuit 12 are in the disconnected state.

At a seventh moment t7, the controller controls the mains switches T1a, T1b, T1c, T3a, T3b, and T3c to be turned on, so that the lines between the three-phase alternating current input ends: Input A, Input B, and Input C and the input ends of the three-phase rectifier circuit 12 are in the connected state. First duration from the seventh moment t7 to the sixth moment t6 should be greater than shortest turn-off time ta of the switches, that is, t7 - t6 > ta. The first duration is duration from a moment at which the lines between the positive electrode and the negative electrode of the energy storage apparatus and the input ends of the corresponding single-phase rectifier units are disconnected to a moment at which the lines between the three-phase alternating current input ends and the input ends of single-phase rectifier units in the three-phase rectifier circuit are connected. Optionally, at the seventh moment t7, the discharge power of the power conversion circuit 14 may also be reduced.

At an eighth moment t8, the controller controls the charge/discharge circuit 14 to stop reversely working for supplying power to the positive bus +BUS and the negative bus -BUS. At the same time, the controller controls the three-phase rectifier circuit to start working. Second duration from the eighth moment t8 to the seventh moment t7 should be greater than shortest turn-on time tb of the switches, that is, t8 - t7 > tb. The second duration is duration from a moment at which the lines between the three-phase alternating current input ends and the input ends of the corresponding single-phase rectifier units in the three-phase rectifier circuit are connected to a moment at which the charge/discharge circuit stops working.

Optionally, after the eighth moment t8, the controller may further control the charge/discharge circuit 14 to charge the electric energy on the positive bus +BUS and the negative bus -BUS to the energy storage apparatus 300.

In a process in which the uninterruptible power supply system 100 switches from the mode of supplying power through the energy storage apparatus to the mode of supplying power through mains electricity, the discharge duration in which the charge/discharge circuit 14 discharges the electric energy stored in the energy storage apparatus 300 to the positive bus +BUS and the negative bus - BUS is ty = t8 - t5. The discharge duration ty has a specified value range a2 ≤ ty ≤ b2, where a2 is mainly determined by the switching time of the switches, and b2 is mainly determined by a safety margin of the switching time of the switches. As described above, the discharge duration ty is not a fixed value but a variable value. The discharge duration ty is negatively correlated with both the working temperature and the discharge current integral. In addition, the first duration is positively correlated with the discharge duration ty of the charge/discharge circuit 14, and the second duration is positively correlated with the discharge duration ty of the charge/discharge circuit 14. When the load rate is small and the charge power is low before an alternating current is abnormal, the discharge duration ty increases. If the discharge duration ty increases, it means that both the first duration and the second duration increase, which can improve the reliability of the switch switching action in the switching circuit.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An uninterruptible power supply system, comprising three-phase alternating current input ends, a three-phase rectifier circuit, a three-phase inverter circuit, a charge/discharge circuit, a switching circuit, at least two first fuses, and at least two second fuses, wherein
the three-phase rectifier circuit is configured to convert alternating currents input by the three-phase alternating current input ends into direct currents, an output end of the three-phase rectifier circuit is connected to an input end of the three-phase inverter circuit, the three-phase inverter circuit is configured to convert the direct currents into alternating currents, and an output end of the three-phase inverter circuit is an output end of the uninterruptible power supply system;
the three-phase rectifier circuit comprises a first capacitor and a second capacitor that are connected between a positive bus and a negative bus and that are connected in series, each phase rectifier circuit in the three-phase rectifier circuit comprises two single-phase rectifier units that are connected in parallel, and an output end of each single-phase rectifier unit is connected to a connection point of the first capacitor and the second capacitor;
an input end of each phase rectifier circuit is connected to a one-phase alternating current input end of the three-phase alternating current input ends, an input end of one single-phase rectifier unit in each phase rectifier circuit is configured to connect the one-phase alternating current input end and a positive electrode of an energy storage apparatus, and an input end of the other single-phase rectifier unit is configured to connect the one-phase alternating current input end and a negative electrode of the energy storage apparatus;
the switching circuit is configured to switch between connecting lines between the three-phase alternating current input ends and input ends of single-phase rectifier units in the three-phase rectifier circuit and connecting lines between the positive electrode and the negative electrode of the energy storage apparatus and the input ends of corresponding single-phase rectifier units;
one first fuse is separately connected in series to at least two phase lines in a three-phase line between the positive electrode of the energy storage apparatus and the input end of the one single-phase rectifier unit in each phase rectifier circuit;
one second fuse is separately connected in series to at least two phase lines in a three-phase line between the negative electrode of the energy storage apparatus and the input end of the other single-phase rectifier unit in each phase rectifier circuit; and
a first positive end of the charge/discharge circuit is connected to one of the at least two first fuses, a first negative end of the charge/discharge circuit is connected to one of the at least two second fuses, a second positive end of the charge/discharge circuit is configured to connect to the positive bus, and a second negative end of the charge/discharge circuit is configured to connect to the negative bus.

2. The uninterruptible power supply system according to claim 1, wherein the uninterruptible power supply system comprises three first fuses, and one first fuse is connected in series to each phase line in the three-phase line between the positive electrode of the energy storage apparatus and the input end of the one single-phase rectifier unit in each phase rectifier circuit.

3. The uninterruptible power supply system according to claim 1, wherein the uninterruptible power supply system comprises two first fuses, one same first fuse is connected in series to two phase lines in the three-phase line between the positive electrode of the energy storage apparatus and the input end of the one single-phase rectifier unit in each phase rectifier circuit, and the other first fuse is connected in series to the other phase line.

4. The uninterruptible power supply system according to any one of claims 1 to 3, wherein the uninterruptible power supply system comprises three second fuses, and one second fuse is connected in series to each phase line in the three-phase line between the negative electrode of the energy storage apparatus and the input end of the other single-phase rectifier unit in each phase rectifier circuit.

5. The uninterruptible power supply system according to any one of claims 1 to 3, wherein the uninterruptible power supply system comprises two second fuses, one same second fuse is connected in series to two phase lines in the three-phase line between the negative electrode of the energy storage apparatus and the input end of the other single-phase rectifier unit in each phase rectifier circuit, and the other second fuse is connected in series to the other phase line.

6. The uninterruptible power supply system according to any one of claims 1 to 5, wherein the switching circuit comprises:
mains switches that are located between the three-phase alternating current input ends and the input end of each phase rectifier circuit;
positive energy storage switches that are located on each phase line in the three-phase line between the positive electrode of the energy storage apparatus and the input end of the one single-phase rectifier unit in each phase rectifier circuit; and
negative energy storage switches that are located on each phase line in the three-phase line between the negative electrode of the energy storage apparatus and the input end of the other single-phase rectifier unit in each phase rectifier circuit.

7. The uninterruptible power supply system according to claim 6, wherein the positive electrode of the energy storage apparatus is separately connected in series to the at least two first fuses and then is connected in series to the positive energy storage switches, and the negative electrode of the energy storage apparatus is separately connected in series to the at least two second fuses and then is connected in series to the negative energy storage switches.

8. The uninterruptible power supply system according to any one of claims 1 to 7, wherein the uninterruptible power supply system further comprises a controller, and the controller is configured to:
control discharge duration in which the charge/discharge circuit discharges electric energy stored in the energy storage apparatus to the positive bus and the negative bus, wherein the discharge duration is negatively correlated with a current working temperature of the charge/discharge circuit.

9. The uninterruptible power supply system according to any one of claims 1 to 7, wherein the uninterruptible power supply system further comprises a controller, and the controller is configured to:
control discharge duration in which the charge/discharge circuit discharges electric energy stored in the energy storage apparatus to the positive bus and the negative bus, wherein the discharge duration is negatively correlated with a discharge power of the charge/discharge circuit.

10. The uninterruptible power supply system according to claim 8 or 9, wherein the controller is specifically configured to: control first duration within the discharge duration to be positively correlated with the discharge duration, wherein the first duration is duration from a moment at which the lines between the three-phase alternating current input ends and the input ends of the single-phase rectifier units in the three-phase rectifier circuit are disconnected to a moment at which the lines between the positive electrode and the negative electrode of the energy storage apparatus and the input ends of the corresponding single-phase rectifier units are connected, or the first duration is duration from a moment at which the lines between the positive electrode and the negative electrode of the energy storage apparatus and the input ends of the corresponding single-phase rectifier units are disconnected to a moment at which the lines between the three-phase alternating current input ends and the input ends of the single-phase rectifier units in the three-phase rectifier circuit are connected.

11. The uninterruptible power supply system according to claim 8 or 9, wherein the controller is specifically configured to: control second duration within the discharge duration to be positively correlated with the discharge duration, wherein the second duration is duration from a moment at which the lines between the positive electrode and the negative electrode of the energy storage apparatus and the input ends of the corresponding single-phase rectifier units are connected to a moment at which the charge/discharge circuit stops working, or the second duration is duration from a moment at which the lines between the three-phase alternating current input ends and the input ends of the single-phase rectifier units in the three-phase rectifier circuit are connected to a moment at which the charge/discharge circuit stops working.
